(19) Europäisches Patentamt
European Patent Office
Office européen des brevets

(11) **EP 4 661 137 A1**

(12) **EUROPEAN PATENT APPLICATION**

(43) Date of publication:
**10.12.2025 Bulletin 2025/50**

(21) Application number: **25180269.0**

(22) Date of filing: **02.06.2025**

(51) International Patent Classification (IPC):
***H01M 10/056*** *(2010.01)* ***H01M 10/0565*** *(2010.01)*
***H01M 10/42*** *(2006.01)* ***H01M 50/403*** *(2021.01)*
***H01M 50/414*** *(2021.01)* ***H01M 50/446*** *(2021.01)*
***H01M 50/449*** *(2021.01)* ***H01M 50/489*** *(2021.01)*
*C07F 9/6544 (2006.01)*

(52) Cooperative Patent Classification (CPC):
**H01M 10/4235; H01M 10/056; H01M 10/0565; H01M 50/403; H01M 50/414; H01M 50/446; H01M 50/449; H01M 50/489;** C07F 9/547; H01M 10/052; H01M 10/0525; H01M 2300/0091

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.06.2024 KR 20240072502**

(71) Applicants:
- **SK Innovation Co., Ltd.**
  **Seoul 03188 (KR)**
- **SK On Co., Ltd.**
  **Seoul 03161 (KR)**

(72) Inventors:
- **LEE, Han Sol**
  **Daejeon 34124 (KR)**
- **GO, Hyeon Jin**
  **Daejeon 34124 (KR)**
- **PARK, Myung Soo**
  **Daejeon 34124 (KR)**
- **RYU, Hye Min**
  **Daejeon 34124 (KR)**
- **BAN, Hee Jung**
  **Daejeon 34124 (KR)**
- **CHOI, Jae Hoon**
  **Daejeon 34124 (KR)**
- **KIM, Myoung Lae**
  **Daejeon 34124 (KR)**
- **LEE, Hong Won**
  **Daejeon 34124 (KR)**

(74) Representative: **Prüfer & Partner mbB**
**Patentanwälte · Rechtsanwälte**
**Sohnckestraße 12**
**81479 München (DE)**

(54) **MONOMER FOR ELECTROLYTE, ELECTROLYTE FOR SECONDARY BATTERY INCLUDING THE SAME, METHOD OF PREPARING THE SAME AND LITHIUM SECONDARY BATTERY INCLUDING THE SAME**

(57) A monomer for an electrolyte according to the embodiments of the present disclosure may include a compound represented by Formula 1. A lithium secondary battery according to the embodiments of the present disclosure includes a cathode, an anode, and an electrolyte, wherein the electrolyte may include a polymer of the compound represented by Formula 1.

[Formula 1]

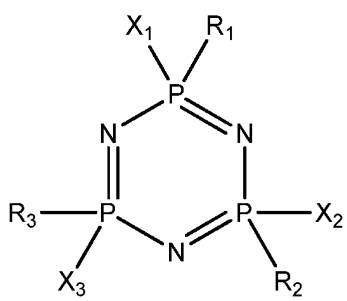

wherein $X_1$, $X_2$ and $X_3$ are each independently a halogen element,
$R_1$, $R_2$ and $R_3$ are each independently hydrogen, a halogen element, a substituted or unsubstituted C1 to

EP 4 661 137 A1

C6 alkyl group, or a polymerizable group, and
at least one of $R_1$, $R_2$ or $R_3$ is a polymerizable group.

[FIG. 1]

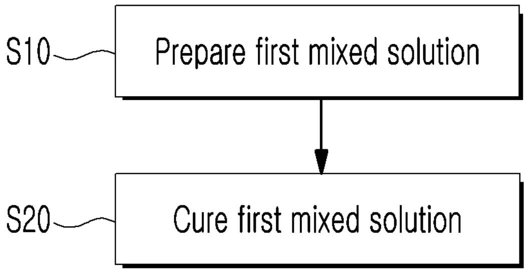

## Description

TECHNICAL FIELD

The present disclosure relates to a monomer for an electrolyte, an electrolyte for a secondary battery including the same, a method of preparing the electrolyte, and a lithium secondary battery including the electrolyte.

BACKGROUND

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Since commercially available lithium secondary batteries mainly use liquid electrolytes until now, there are safety problems such as leakage, ignition, and explosion due to sudden environmental changes, including temperature fluctuations, external impacts and the like. To address these problems, attempts are being made to solidify the electrolyte, thereby enhancing stability and increasing energy density.

SUMMARY

In various implementations, all-solid-state batteries may include solid-state electrolytes such as gel polymers, oxides, sulfides, or composite polymers as the electrolyte. Accordingly, stability against ignition and explosion caused by external impacts or external environmental fluctuations may be enhanced. However, among solid batteries, a battery that includes a portion of a liquid electrolyte may have a greater risk of ignition than the all-solid-state battery. Therefore, research on flame retardant additives that may be included in the electrolyte has been actively conducted to improve the stability against ignition of gel polymer electrolytes or composite polymer electrolytes.

The technology of the present disclosure can be implemented to provide a monomer for an electrolyte with improved flame retardancy.

The technology of the present disclosure can also be implemented to provide an electrolyte for a secondary battery with improved flame retardancy and ionic conductivity.

In addition, the technology of the present disclosure can be implemented to provide a method of preparing an electrolyte for a secondary battery with improved flame retardancy and ionic conductivity.

Further, the technology of the present disclosure can be implemented to provide a lithium secondary battery with improved stability and electrochemical characteristics.

A monomer for an electrolyte according to exemplary embodiments of the disclosed technology may include a compound represented by Formula 1 below:

[Formula 1]

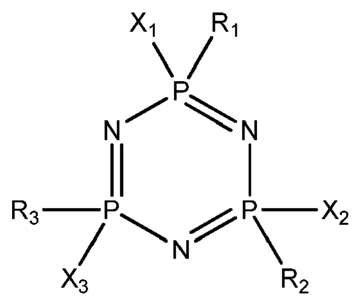

In Formula 1, $X_1$, $X_2$ and $X_3$ may each independently be a halogen element, $R_1$, $R_2$ and $R_3$ may each independently be hydrogen, a halogen element, a substituted or unsubstituted C1 to C6 alkyl group, or a polymerizable group, and at least one of $R_1$, $R_2$ or $R_3$ may be a polymerizable group.

In some embodiments, in Formula 1, $R_1$ to $R_3$ may be the same as each other.
In some embodiments, in Formula 1, $X_1$, $X_2$ and $X_3$ may be fluorine (F).
In some embodiments, the polymerizable group may be represented by Formula 2 below:

[Formula 2]

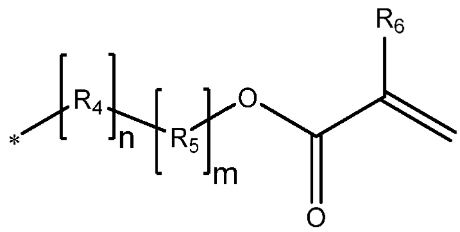

In Formula 2, $R_4$ may be a substituted or unsubstituted C1 to C10 oxyalkylene group, $R_5$ may be a substituted or unsubstituted C1 to C10 alkylene group, and $R_6$ may be hydrogen or a methyl group, and n may be 0 to 5, m may be 0 to 3, and * may represent a bonding site.
In some embodiments, in Formula 1 above, $R_1$, $R_2$ and $R_3$ may each independently be represented by Formula 2.
In some embodiments, in Formula 2 above, m may be 0, and n may be 1 to 3.
In some embodiments, in Formula 2 above, $R_4$ may be a substituted or unsubstituted C1 to C6 oxyalkylene group.
In some embodiments, in Formula 1 above, $R_1$, $R_2$ and $R_3$ may each independently be represented by at least one of Formula 2-1, Formula 2-2, Formula 2-3, or Formula 2-4 below:

[Formula 2-1]

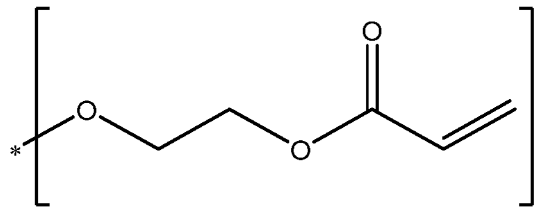

In Formula 2-1, * may represent a bonding site.

[Formula 2-2]

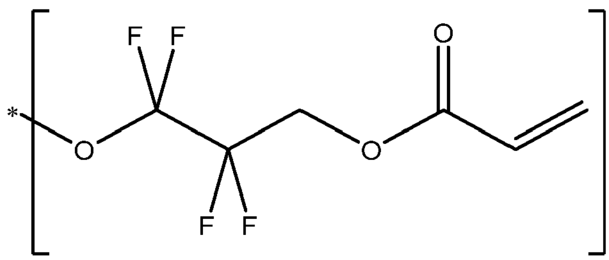

In Formula 2-2, * may represent a bonding site.

[Formula 2-3]

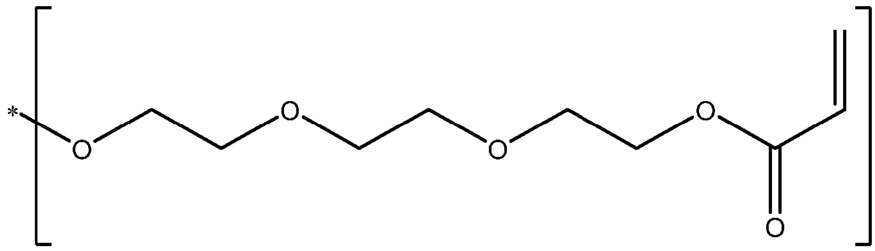

In Formula 2-3, * may represent a bonding site.

[Formula 2-4]

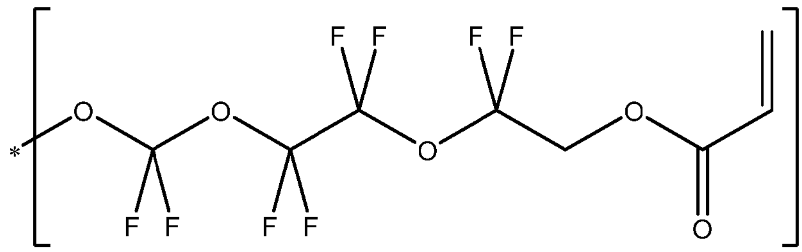

In Formula 2-4, * may represent a bonding site.

An electrolyte for a secondary battery according to exemplary embodiments may include: a flame retardant compound including a polymer derived from the above-described monomer for an electrolyte; and a lithium salt.

In some embodiments, the electrolyte may further include a composite electrolyte which includes an organic polymer and an inorganic electrolyte, wherein the composite electrolyte has a film form.

In some embodiments, the inorganic electrolyte may include an oxide-based solid electrolyte.

In some embodiments, a content of the flame retardant compound may be 5% by weight to 30% by weight based on a total weight of the electrolyte for a secondary battery.

A lithium secondary battery according to exemplary embodiments may include: a cathode; an anode disposed opposite to the cathode; and an electrolyte layer disposed between the cathode and the anode and including the above-described electrolyte for a secondary battery.

A method of preparing an electrolyte for a secondary battery according to exemplary embodiments may include: preparing a first mixed solution including the above-described monomer for an electrolyte and an electrolyte solution; and curing the first mixed solution.

In some embodiments, the first mixed solution may further include an organic polymer and an inorganic electrolyte.

In some embodiments, a content of the monomer for an electrolyte may be 5 wt% to 30 wt% based on a total weight of the first mixed solution.

In some embodiments, the first mixed solution may further include a thermal initiator, and the step of curing the first mixed solution may include heat-treating the first mixed solution.

In some embodiments, the first mixed solution may further include a photo-initiator, and the step of curing the first mixed solution may include irradiating the first mixed solution with light.

The monomer for an electrolyte ("electrolyte monomer") according to exemplary embodiments of the present disclosure may have self-extinguishing properties. The ignition stability of an electrolyte including the electrolyte monomer may be improved.

The electrolyte monomer according to exemplary embodiments of the present disclosure may be included in an electrolyte for a secondary battery within a predetermined content range. The stability and electrical characteristics of the electrolyte may be improved simultaneously.

The lithium secondary battery according to exemplary embodiments of the present disclosure may include the electrolyte for a secondary battery. The room-temperature and high-temperature safety and ionic conductivity may be improved, thereby enhancing the cycle life characteristics and electrical characteristics.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic flowchart for describing processes of a method of preparing an electrolyte for a secondary battery according to exemplary embodiments;
FIG. 2 is a schematic cross-sectional view illustrating an electrode cell according to exemplary embodiments; and
FIG. 3 is a schematic view illustrating the structure of an electrolyte layer for a secondary battery according to exemplary embodiments.

DETAILED DESCRIPTION

According to exemplary embodiments, an electrolyte monomer, a method of preparing an electrolyte for a secondary battery including the same, and an electrolyte for a secondary battery prepared using the method are provided. In addition, a lithium secondary battery including an electrolyte layer including the electrolyte for a secondary battery is also provided.

Hereinafter, embodiments of the present disclosure will be described in detail. However, these are merely illustrative and the present disclosure is not limited to the specific embodiments described by way of example.

Unless otherwise defined herein, when a portion such as a layer, film, thin-film, region, or plate, etc. is present "on" or "above" another portion, it may include not only the case where the portion is present "directly on" the other portion, but also the case where another portion is present between them.

If there is an isomer of a compound represented by a formula used herein, the compound represented by the corresponding formula refers to the representative formula including the isomer.

The term "substituted" as used herein may mean that at least one of the hydrogen atoms of the compound is substituted with a substituent such as a halogen group, a hydroxyl group, a heteroalkyl group (C1-C5), a heterocycloalkyl group (C1-C5), a heteroaryl group (C6-C12), an amine group, a nitrile group, a nitro group, a silyl group, etc. In the present disclosure, the terms "heteroalkyl group," "heterocycloalkyl group," and "heteroaryl group" may mean that at least one of the carbon atoms of an alkyl group, a cycloalkyl group, or an aryl group is substituted with at least one of nitrogen, oxygen, or sulfur, respectively.

The term "unsubstituted" as used herein may mean that none of the hydrogen atoms of the compound are substituted.

The term "substituted or unsubstituted Y group of Ca to Cb" as used herein means that the Y group in an unsubstituted state has a to b carbon atoms, and does not include the carbon number of a substituent substituted on the Y group.

The term "flame retardancy" as used herein refers to the performance of preventing or suppressing combustion whereby a sample burns while in contact with a flame (ignition source) but self-extinguishes once the flame is removed. The flame retardancy may be evaluated based on the time it takes for the flame to be extinguished after removing the torch used to supply a flame with a certain heat amount to the sample for 1 second or more. The shorter the time it takes for the flame to be extinguished, the better the flame retardancy is evaluated to be.

Specifically, the term "flame retardant compound" as used herein may be a compound which, when glass fiber cut to 16 pi is impregnated with the flame retardant compound and cured as needed, and then ignited by supplying a flame of a constant heat amount for 1 second or more using a torch and the torch is removed, exhibits an extinguishing time (s/g) relative to the mass of the sample of 100 s/g or less, specifically 95 s/g or less, and more specifically 90 s/g or less.

The electrolyte monomer according to exemplary embodiments may include a compound represented by Formula 1 below.

[Formula 1]

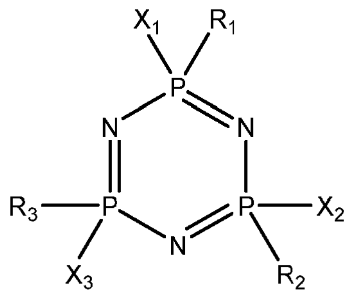

In Formula 1, $X_1$, $X_2$ and $X_3$ may each independently be a halogen element.

In Formula 1, $R_1$, $R_2$ and $R_3$ may each independently be hydrogen, a halogen element, a substituted or unsubstituted C1 to C6 alkyl group, or a polymerizable group. The electrolyte monomer may be polymerized through the polymerizable group. Accordingly, a polymer derived from the electrolyte monomer may be used as a flame retardant compound.

In some embodiments, at least one of $R_1$, $R_2$ or $R_3$ may be a polymerizable group. For example, in some application, all of $R_1$, $R_2$ and $R_3$ may be polymerizable groups. Accordingly, the compound represented by Formula 1 may be stably polymerized to form a polymer. As a result, a polymer derived from the electrolyte monomer may be used as a flame retardant compound.

The compound represented by Formula 1 may be a phosphorus compound containing a phosphazene group. The phosphorus compound may be thermally decomposed upon combustion to generate polymetaphosphate. In addition, as the polymetaphosphate is generated, a carbon compound (e.g., charcoal) may be generated by dehydration, esterification and dehydrogenation reactions of the polymetaphosphate. The polymetaphosphate may form a protective layer, and the carbon compound may form a carbon film. The phosphorus compound may block oxygen and heat by the protective layer and carbon film formed upon combustion.

In addition, free radicals (e.g., hydrogen free radicals) may be generated by the ignition of an organic solvent, etc., thereby promoting chain ignition. A phosphorus atom contained in the phosphorus compound including the phosphazene group may be released as a radical atom upon ignition and may combine with the free radical (e.g., the hydrogen free radical). The free radical may be removed by combining with phosphorus in the form of a radical atom, and chain ignition may be suppressed. Therefore, the compound represented by Formula 1 may have high self-extinguishing properties, and the flame retardancy of an electrolyte including the compound represented by Formula 1 may be improved.

The compound represented by Formula 1 above may have a high phosphorus content per molecule as it includes a phosphazene group. For example, the phosphorus content per molecule may be 5 mol% to 20 mol%. Accordingly, the flame retardancy of an electrolyte including the compound represented by Formula 1 above may be further improved.

In some embodiments, the polymerizable group may be represented by Formula 2 below.

[Formula 2]

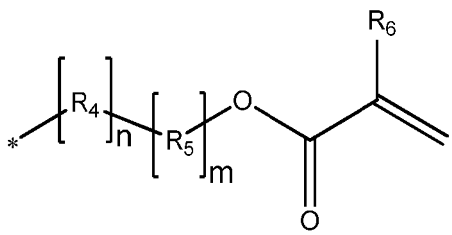

In Formula 2, $R_4$ may be a substituted or unsubstituted C1 to C10, C1 to C6, C1 to C5, C1 to C4, C1 to C3 oxyalkylene group, or C2 oxyalkylene group, $R_5$ may be a substituted or unsubstituted C1 to C10, C1 to C6, C1 to C5, C1 to C4, or C1 to C3 alkylene group, and $R_6$ may be hydrogen or a methyl group.

In Formula 2, n may be 0 to 5, 1 to 5, 1 to 4, or 1 to 3, m may be 0 to 3, or 0 to 2, and * may represent a bonding site.

The compound represented by Formula 1 above may be stably polymerized through the functional group represented by Formula 2 above. Accordingly, high temperature stability and flame retardancy may be improved due to the protective layer formation effect and the liquid-capturing effect of the flame retardant compound including the polymer derived from the electrolyte monomer.

As used herein, the term "oxyalkylene group" is used to encompass a compound in which any one of the methylene groups ($-CH_2-$) of a straight-chain or branched-chain saturated hydrocarbon is substituted with an oxygen atom. For example, the oxyalkylene group may be represented by "-Ra-O-" or "-Ra-O-Rb-" (where Ra and Rb are alkylene groups).

For example, the oxymethylene group may have a structure in which one of the carbon atoms of the methylene group is substituted with an oxygen atom. Examples of the oxyalkylene group may include an oxymethylene group, an oxyethylene group, an oxypropylene group, an oxybutylene group, an oxypentylene group, a dimethyloxypropylene group, an ethyloxypropylene group, and the like.

In one embodiment, the polymerizable group may be a functional group represented by Formula 2-a below.

[Formula 2-a]

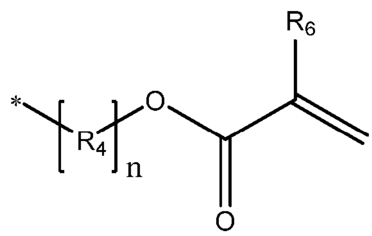

In Formula 2-a, $R_4$ may be a substituted or unsubstituted C1 to C5, C1 to C4, or C1 to C3 oxyalkylene group, and $R_6$ may be hydrogen or a methyl group.

In Formula 2-a, n may be 1 to 5, 1 to 4, or 1 to 3, and * may represent a bonding site.

Formula 2-a is an example of a case where m is 0 (zero) in Formula 2, and the phosphorus content of a flame retardant compound including the polymer derived from the electrolyte monomer may be relatively increased compared to the case where m is not 0. Therefore, the high-temperature stability and flame retardancy of the flame retardant compound may be further improved.

For example, in Formula 2-a, $R_4$ may be a fluorine-substituted oxymethylene group, oxyethylene group, or oxypropylene group. Accordingly, when fluorine is included in the compound represented by Formula 1, the content of phosphorus and fluorine in the compound represented by Formula 1 may be increased. Therefore, the flame retardancy and high-temperature stability of the flame retardant compound including the polymer derived from the electrolyte monomer may be further improved.

The term "fluorine-substituted" as used herein means a structure in which at least one of the hydrogen atoms bonded to a carbon atom is substituted with a fluorine atom. For example, it may mean a structure in which some of the hydrogen atoms bonded to a carbon atom are substituted with a fluorine atom. For example, it may mean a structure in which all of the hydrogen atoms bonded to a carbon atom are substituted with a fluorine atom.

In some embodiments, at least two of $R_1$ to $R_3$ in Formula 1 may be the same as each other. In one embodiment, $R_1$ to $R_3$ in Formula 1 may be the same as each other. For example, the $R_1$, $R_2$ and $R_3$ may be polymerizable groups having the same structure. For example, the $R_1$, $R_2$ and $R_3$ may be represented by Formula 2 above having the same structure. Accordingly, when the compound represented by Formula 1 above is polymerized, a network polymer may be formed. The network polymer may have thermosetting properties, and the high temperature stability and flame retardancy of a flame retardant compound including a polymer derived from the electrolyte monomer may be improved.

In some embodiments, in Formula 1 above, $X_1$, $X_2$ and $X_3$ may be fluorine. Accordingly, the compound represented by Formula 1 above may include fluorine atoms. The fluorine atom may suppress a chain combustion reaction by receiving electrons from a radical that acts as a chain combustion agent upon ignition. Therefore, the flame retardancy of a flame retardant compound including a polymer derived from the electrolyte monomer including the compound represented by Formula 1 above may be improved.

In some embodiments, at least two of $R_1$, $R_2$ and $R_3$ in Formula 1 may each be independently represented by Formula 2. In one embodiment, $R_1$, $R_2$ and $R_3$ in Formula 1 may each be independently represented by Formula 2. Accordingly, the compound represented by Formula 1 may include two or more (meth)acrylate groups.

When the compound represented by Formula 1 above includes two or more (meth)acrylate groups, the compound represented by Formula 1 above may be polymerized to form a crosslinked polymer or a network polymer having thermosetting properties. Accordingly, when the electrolyte monomer is polymerized, the flame retardancy may be improved.

In some embodiments, in Formula 2 above, m may be 0 and n may be 1 to 3. Accordingly, the content of phosphorus in the compound represented by Formula 1 above may be increased. For example, the phosphorus content per molecule may be 5 mol% to 20 mol%. Accordingly, the generation of polymetaphosphate from the compound

represented by Formula 1 above may be promoted upon ignition, such that a protective layer may be formed. Accordingly, the flame retardancy and self-extinguishing properties of the electrolyte including the flame retardant compound derived from the compound represented by Formula 1 above may be improved.

In some embodiments, in Formula 2 above, $R_4$ may be a substituted or unsubstituted C1 to C6 oxyalkylene group. Accordingly, the dehydration reaction of polymetaphosphate generated upon ignition may be promoted to form a carbon compound. Therefore, when the electrolyte monomer is used, flame retardancy may be improved.

In some embodiments, the functional group represented by Formula 2 may include a functional group represented by Formula 2-a1 below.

[Formula 2-a1]

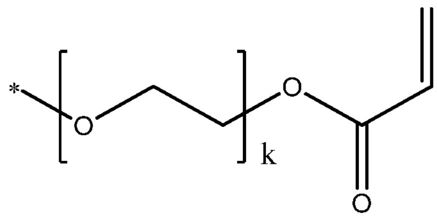

In Formula 2-a1, k may be 1 to 5, 1 to 4, or 1 to 3.

Formula 2-a1 is an example of a case where m is 0 (zero) and $R_6$ is hydrogen in Formula 2, and the phosphorus content of a flame retardant compound including a polymer derived from the electrolyte monomer may be relatively increased compared to the case where m is not 0 or $R_6$ is a methyl group. Therefore, the compound represented by Formula 1 may promote the formation of a protective layer in the electrolyte and improve flame retardancy and self-extinguishing properties.

For example, in Formula 2, m may be 0 and n may be 1. In addition, $R_4$ may be an unsubstituted C1 to C5, or C1 to C3 oxyalkylene group. Accordingly, since the phosphorus content in the compound represented by Formula 1 may be further increased, the production of polymetaphosphate may be further promoted, such that the protective layer may be effectively formed. Therefore, the flame retardancy and self-extinguishing properties of the electrolyte including the compound represented by Formula 1 may be improved.

In one embodiment, in Formula 1 above, $R_1$, $R_2$ and $R_3$ may each be a functional group represented by Formula 2-1 below. The functional group represented by Formula 2-1 below includes an acrylate group and has a relatively small number of carbon atoms. Accordingly, the phosphorus content of the compound represented by Formula 1 including the functional group represented by Formula 2-1 below may be further increased, and the flame retardancy and self-extinguishing properties may be further improved.

[Formula 2-1]

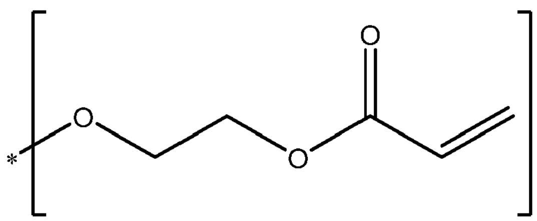

In Formula 2-1, * may represent a bonding site. For example, at *, the compound represented by Formula 2-1 may be bonded to the compound represented by Formula 1.

For example, in Formula 2 above, m may be 0 and n may be 3. In addition, $R_4$ may be an unsubstituted C1 to C5, or C1 to C3 oxyalkylene group. Accordingly, an oxyalkylene group structure may be included in the compound represented by Formula 1 above, thereby increasing the content of oxygen atoms. For example, an oxygen content per molecule may be 10 mol% to 35 mol%. Accordingly, a dehydration reaction of polymetaphosphate generated upon ignition may be promoted, thereby forming a carbon compound. Therefore, the flame retardancy of the electrolyte monomer may be improved.

In one embodiment, in Formula 1 above, $R_1$, $R_2$ and $R_3$ may be functional groups represented by Formula 2-3 below. The compound represented by Formula 2-3 below includes an acrylate group and an oxyalkylene group. Accordingly, the phosphorus and oxygen contents in the compound represented by Formula 1 including the compound

represented by Formula 2-3 may be further increased, and the flame retardancy may be further improved. For example, the phosphorus content per molecule may be 5 mol% to 20 mol% and an oxygen content per molecule may be 10 mol% to 35 mol%.

[Formula 2-3]

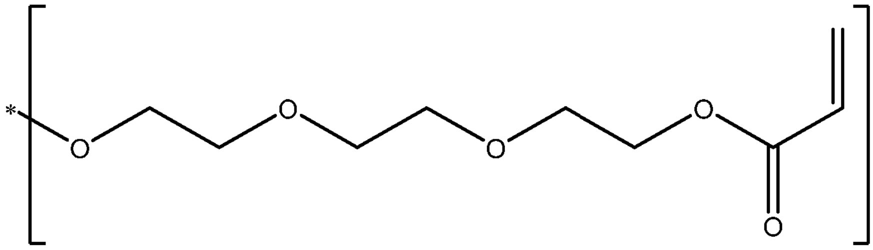

In Formula 2-3, * may represent a bonding site. For example, at *, the functional group represented by Formula 2-3 may be bonded to the compound represented by Formula 1.

In some embodiments, the functional group represented by Formula 2 may include a functional group represented by Formula 2-a2 below.

[Formula 2-a2]

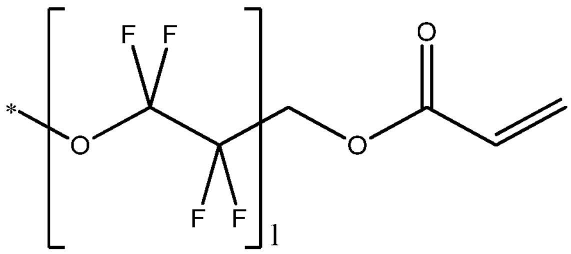

In Formula 2-a2, 1 may be 1 to 3, 1 to 2, or 1. Accordingly, while the compound represented by Formula 1 includes fluorine, the fluorine content included in the compound represented by Formula 1 may be increased. Therefore, combustion of the electrolyte including the compound represented by Formula 1 may be suppressed, and the formation of a protective layer may be promoted.

For example, in Formula 2 above, m may be 0 and n may be 1. In addition, $R_4$ may be a C1 to C5, or C1 to C3 oxyalkylene group in which at least one hydrogen atom is substituted with a fluorine atom. Accordingly, the fluorine atom content included in the compound represented by Formula 1 above may be increased. Therefore, the chain combustion reaction during combustion may be further suppressed, and the flame retardancy of the compound represented by Formula 1 above may be further improved. In addition, the electrical characteristics may also be enhanced due to the fluorine atoms.

In one embodiment, in Formula 1 above, $R_1$, $R_2$ and $R_3$ may be a functional group represented by Formula 2-2 below. The functional group represented by Formula 2-2 below includes an acrylate group and a fluorine atom, and has a relatively small number of carbon atoms. Accordingly, the phosphorus and fluorine contents in the compound represented by Formula 1 including the functional group represented by Formula 2-2 below may be further increased, and the flame retardancy and self-extinguishing properties may be further improved.

[Formula 2-2]

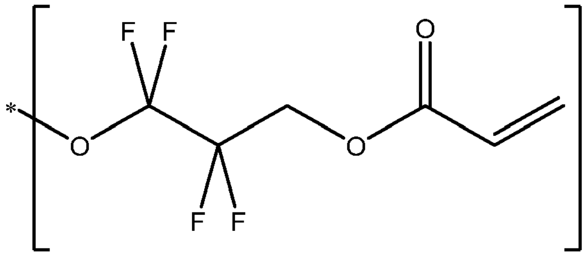

In Formula 2-2, * may represent a bonding site. For example, at *, the compound represented by Formula 2-2 may be bonded to the compound represented by Formula 1.

In some embodiments, the functional group represented by Formula 2 may include a functional group represented by Formula 2-a3 below.

[Formula 2-a3]

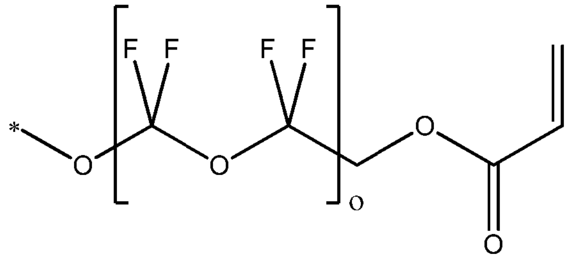

In Formula 2-a3, o may be 1 to 4, 1 to 3, or 1 to 2. Accordingly, while the compound represented by Formula 1 includes fluorine, the fluorine content included in the compound represented by Formula 1 may be increased. Accordingly, combustion of the electrolyte including the compound represented by Formula 1 may be suppressed, and the formation of a protective layer may be promoted.

For example, in Formula 2 above, m may be 0 and n may be 3. In addition, $R_4$ may be a C1 to C5, or C1 to C3 oxyalkylene group in which at least one hydrogen atom is substituted with a fluorine atom. Accordingly, the fluorine atom content included in the compound represented by Formula 1 above may be increased. Accordingly, the chain combustion reaction during combustion may be further suppressed, and the flame retardancy of the compound represented by Formula 1 above may be further improved, as well as the electrical characteristics may be enhanced due to the fluorine atoms.

In one embodiment, in Formula 1 above, $R_1$, $R_2$ and $R_3$ may be a functional group represented by Formula 2-4 below. The functional group represented by Formula 2-4 may include an acrylate group, an oxyalkylene group and a fluorine atom. Accordingly, the contents of phosphorus, oxygen and fluorine in the compound represented by Formula 1 including the functional group represented by Formula 2-4 may be further increased, and the flame retardancy and self-extinguishing properties may be further improved.

[Formula 2-4]

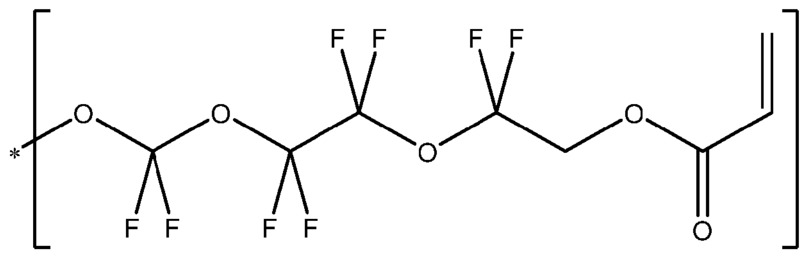

In Formula 2-4, * may represent a bonding site. For example, at *, the compound represented by Formula 2-4 may be bonded to the compound represented by Formula 1.

In some embodiments, at least two of $R_1$, $R_2$ and $R_3$ in Formula 1 may be different from each other. In one embodiment, $R_1$, $R_2$ and $R_3$ in Formula 1 may include different compounds from among the functional group represented by Formula 2-1, the functional group represented by Formula 2-2, the functional group represented by 2-3, and the functional group represented by Formula 2-4.

For example, $R_1$, $R_2$ and $R_3$ in Formula 1 may include two different functional groups from among the functional group represented by Formula 2-1, the functional group represented by Formula 2-2, the functional group represented by 2-3, and the functional group represented by Formula 2-4. Accordingly, the formation of a crosslinked polymer or a network polymer may be promoted during polymerization. Therefore, the flame retardancy of the electrolyte layer may be improved.

For example, in Formula 1 above, $R_1$, $R_2$ and $R_3$ may each be a different compound from among the functional group represented by Formula 2-1 above, the functional group represented by Formula 2-2 above, the functional group represented by Formula 2-3 above and the functional group represented by Formula 2-4 above. Accordingly, the formation

of a crosslinked polymer or a network polymer during polymerization may be further promoted. Accordingly, the flame retardancy of the electrolyte layer may be further improved.

In exemplary embodiments, the monomer represented by Formula 1 may be prepared by copolymerizing a compound represented by Formula 3 below and a compound represented by Formula 4 below, and then substituting it with a halogen element.

[Formula 3]

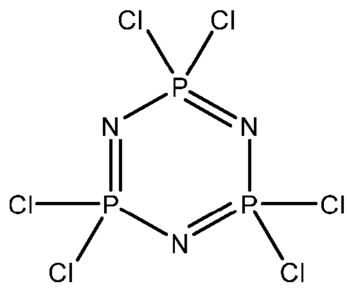

[Formula 4]

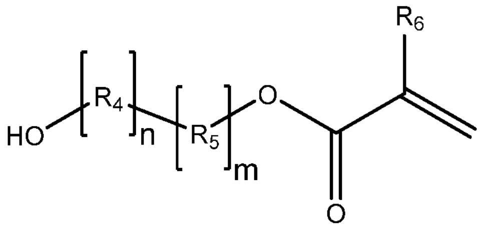

In Formula 4, $R_4$ may be a substituted or unsubstituted C1 to C10 alkylene group, $R_5$ may be a substituted or unsubstituted C1 to C10 oxyalkylene group, $R_6$ may be hydrogen or a methyl group, n may be 0 or 1, and m may be 0 to 3.

In some embodiments, a first mixed solution may be prepared by introducing the compound represented by Formula 3 and triethylamine into a polar solvent. For example, the polar solvent may include an ether solvent such as 1,4-dioxane.

In one embodiment, a ratio of the content of triethylamine to the content of the compound represented by Formula 3 may be 0.5:1 to 2:1, 0.8:1 to 1.2:1, or 0.9:1 to 1.1:1 by weight.

In one embodiment, the content of the compound represented by Formula 3 may be introduced in an amount of 2 parts by weight ("wt parts") to 12 wt parts, 2 wt parts to 10 wt parts, or 3 wt parts to 7 wt parts, based on 100 wt parts of the polar solvent.

In one embodiment, the content of the compound represented by Formula 3 may be introduced in an amount of 2 parts by weight ("wt parts") to 12 wt parts, 2 wt parts to 10 wt parts, or 3 wt parts to 7 wt parts, based on 100 wt parts of the 1,4-dioxane.

In one embodiment, the triethylamine may be introduced in an amount of 2 wt parts to 12 wt parts, 2 wt parts to 10 wt parts, or 3 wt parts to 7 wt parts, based on 100 wt parts of the polar solvent.

Within the above range, side reactions between the compound represented by Formula 3, the triethylamine, and the 1,4-dioxane may be reduced.

In some embodiments, the first mixed solution may be cooled. For example, the cooling may be performed at a temperature of -10 °C to 10 °C, -5 °C to 10 °C, or -5 °C to 5 °C. Within the above temperature range, the first mixed solution may not be solidified, and side reactions due to high temperatures may be suppressed.

In some embodiments, a second mixed solution may be prepared by adding the compound represented by Formula 4 to the cooled first mixed solution.

In one embodiment, the content of the compound represented by Formula 4 may be added in a ratio of 2 wt parts to 12 wt parts, 2 wt parts to 10 wt parts, or 3 wt parts to 7 wt parts based on 100 wt parts of the polar solvent. Within the above range, the hydroxyl group of the compound represented by Formula 4 may undergo a substitution reaction with a chlorine (Cl) element of the compound represented by Formula 3.

In one embodiment, the compound represented by Formula 4 may be added to the cooled first mixed solution in the above-described content for 0.5 hours to 1.5 hours, 0.75 hours to 1.5 hours, or 0.75 hours to 1.25 hours.

In some embodiments, the second mixed solution may be heated to room temperature (e.g., 25 °C) and reacted for 30 to 50 hours, 35 hours to 50 hours, or 35 hours to 45 hours. For example, a copolymerization reaction between the compound represented by Formula 3 and the compound represented by Formula 4 may be performed.

In some embodiments, the second mixed solution that has undergone the reaction may be washed with, for example, deionized water, pure water, ultrapure water, or the like. For example, the washing may be performed once to three times, or twice.

In some embodiments, the second mixed solution that has undergone the reaction after washing may be purified to obtain an intermediate. For example, the purification may be performed by column purification with hexane and ethyl acetate to obtain an intermediate.

In some embodiments, the intermediate may be dissolved in a reaction solvent, for example, tetrahydrofuran (THF), to prepare a third mixed solution.

In one embodiment, the content of the intermediate may be dissolved in an amount of 5 to 20 wt parts, 5 to 15 wt parts, or 8 to 15 wt parts based on 100 wt parts of the reaction solvent. Within the above content range, the intermediate may be sufficiently dissolved in the reaction solvent.

In some embodiments, sodium halide may be added to the third mixed solution to prepare a fourth mixed solution.

The content of the sodium halide may be added in an amount of 1 to 10 wt parts, 1 to 8 wt parts, or 1 to 5 wt parts, based on 100 wt parts of the reaction solvent. Within the above content range, the sodium halide may be dissolved in the reaction solvent, such that the halogen element may react with the intermediate.

In some embodiments, the fourth mixed solution may be reacted at room temperature (e.g., 25 °C) for 20 to 30 hours, 20 to 26 hours, or 22 to 26 hours to prepare the compound represented by Formula 1. Within the above range, the intermediate may sufficiently react with the halogen element derived from the sodium halide while suppressing excessive reaction thereof.

In one embodiment, the fourth mixed solution that has undergone the reaction may be vacuum dried. For example, the vacuum drying may be performed at a temperature of 20 °C to 150 °C, 50 °C to 150 °C, or 75 °C to 125 °C. Within the above temperature range, the occurrence of side reactions may be reduced, and the reaction solvent may be sufficiently dried.

The electrolyte for a secondary battery (hereinafter, also abbreviated as the "electrolyte") may include a flame retardant compound and a lithium salt. In some embodiments, the electrolyte may include a flame retardant compound, a lithium salt, and other components. For example, the flame retardant compound may include a polymer of the above-described electrolyte monomer.

The lithium salt may be expressed by $Li^+X^-$, for example. As an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

According to exemplary embodiments, the flame retardant compound may include a polymer of the above-described electrolyte monomer. For example, the flame retardant compound may be a polymer and/or a copolymer of the above-described electrolyte monomer. Accordingly, the flame retardant compound may suppress side reactions with a compound such as the lithium salt, or with the electrolyte described below. In addition, the flame retardant compound may include a phosphorus-containing functional group, such that oxygen may be blocked during combustion, and thermal runaway may be prevented.

In some embodiments, the flame retardant compound may be a compound obtained by polymerizing or copolymerizing an electrolyte monomer having a thermally reactive functional group and/or a photoreactive functional group. For example, the above-described electrolyte monomer includes an acrylate group. Accordingly, the acrylate group may act as a thermally reactive functional group or a photoreactive functional group.

In some embodiments, the flame retardant compound may be a compound formed by polymerizing the compound represented by Formula 1 described above. For example, it may be a compound formed through a polymerization reaction between acrylate groups of the compound represented by Formula 1 described above.

In one embodiment, the flame retardant compound may include a unit represented by Formula 5 or Formula 6.

[Formula 5]

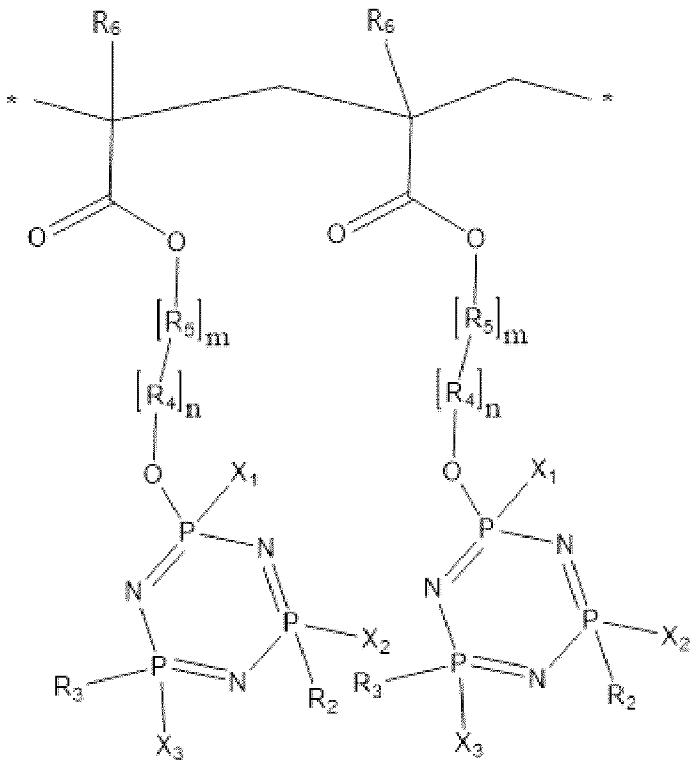

In Formula 5, $R_2$, $R_3$, $X_1$, $X_2$ and $X_3$ may be the same as those described above with reference to Formula 1.

In Formula 5, $R_4$, $R_5$, $R_6$, n and m may be the same as those described above with reference to Formula 2.

**[0123]** * may represent a bonding site.

[Formula 6]

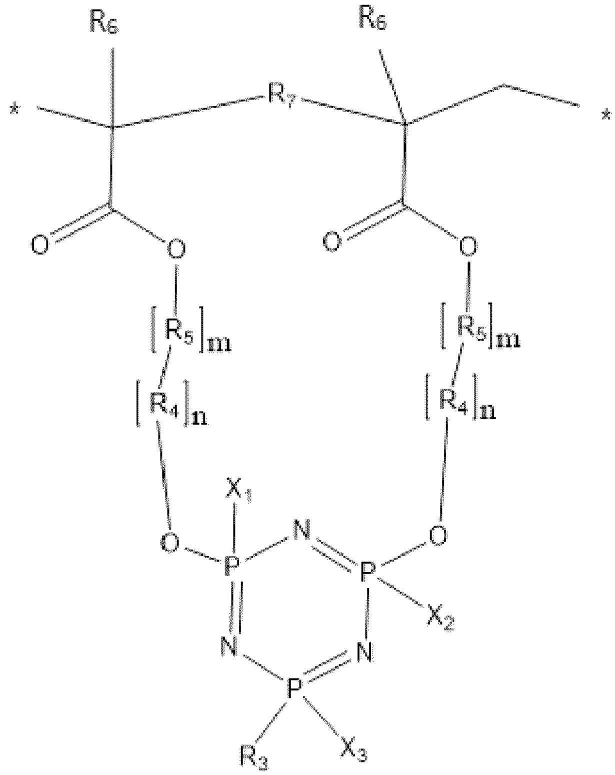

In Formula 6, $R_3$, $X_1$, $X_2$ and $X_3$ may be the same as those described above with reference to Formula 1.
In Formula 6, $R_4$, $R_5$, $R_6$, n and m may be the same as those described above with reference to Formula 2.
**[0126]** * may represent a bonding site.
In Formula 6, $R_7$ may be a unit derived from the phosphazene compound represented by Formula 1 described above, a compound including an acrylate group, a substituted or unsubstituted alkylene group having 1 to 8 carbon atoms, or a combination thereof.
For example, the compound represented by Formula 6 may be a structure in which acrylates included in the phosphazene compound represented by Formula 1 are connected by $R_7$ together with an additional crosslinking agent. For example, the acrylates included in the phosphazene compound represented by Formula 1 described above may be directly connected to each other.
In one embodiment, the flame retardant compound may be a compound in which three or more of the compounds represented by Formula 1 are polymerized. For example, the flame retardant compound may be a compound represented by Formula 7 below.

[Formula 7]

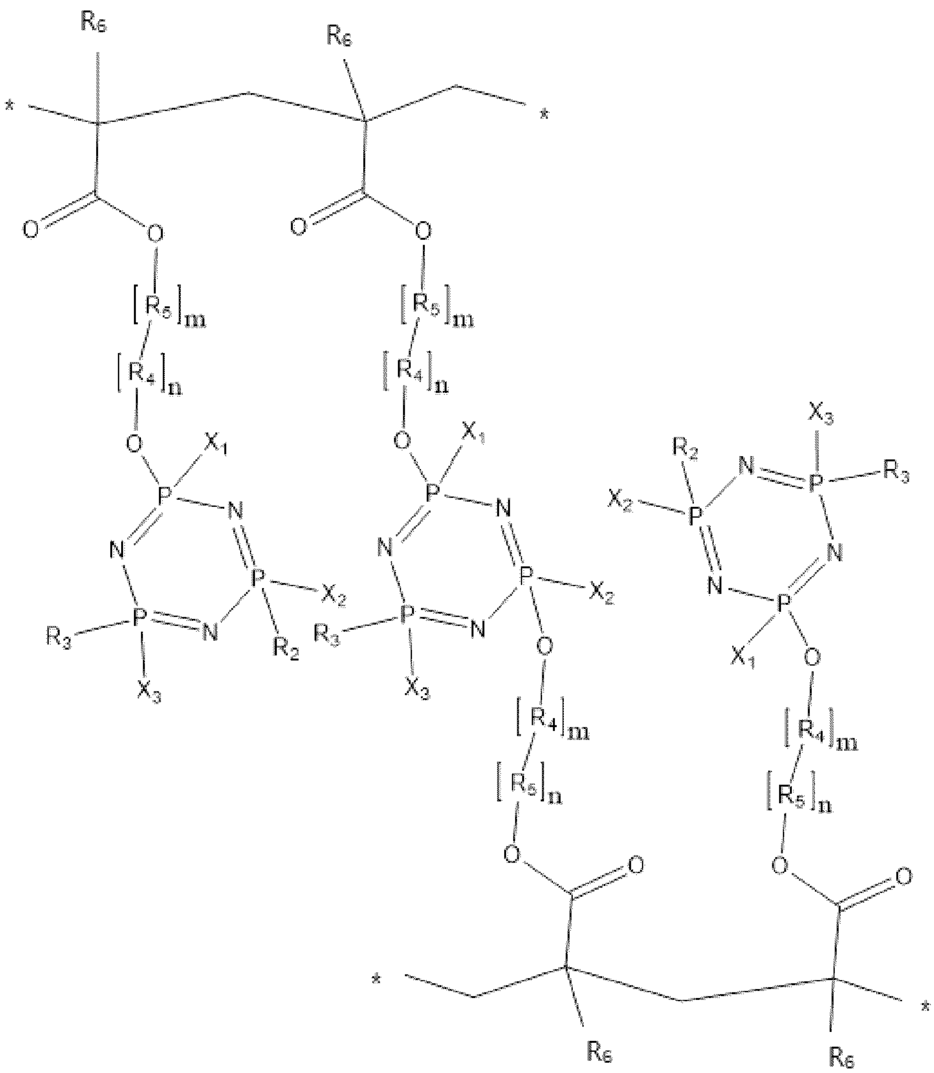

In Formula 7, $R_2$, $R_3$, $X_1$, $X_2$ and $X_3$ may be the same as those described above with reference to Formula 1.

In Formula 7, $R_4$, $R_5$, $R_6$, n and m may be the same as those described above with reference to Formula 2.

In Formulas 5 to 7, a plurality of $R_2$, $R_3$, $R_6$, $R_7$, $X_1$, $X_2$, $X_3$, n and m may be the same or different from each other, and for example, may be the same as each other.

The flame retardant compound including the compound represented by Formulas 5 to 7 may include a phosphazene group, thereby having a high phosphorus content per molecule. Accordingly, the thermal stability and self-extinguishing properties of the flame retardant compound including the compound represented by Formulas 5 to 7 may be improved.

For example, the electrolyte monomer may include one or more compounds represented by Formula 1, and may further include a compound different from Formula 1.

Accordingly, the flame retardant compound may be a polymer including a structural unit derived from the compound represented by Formula 1 described above, or a copolymer including a structural unit derived from the compound represented by Formula 1 described above and a structural unit derived from a compound different from Formula 1 described above. The compounds represented by Formula 1 described above may include one type of compound, or two or more different types, all represented by Formula 1 described above. In addition, the number of compounds represented by Formula 1 that are polymerized is not limited.

In some embodiments, the electrolyte may further include a composite electrolyte including an organic polymer and an inorganic electrolyte.

In some embodiments, the composite electrolyte may have a film form. In one embodiment, the organic polymer and the inorganic electrolyte may form a composite film. For example, the organic polymer and the inorganic electrolyte may be physically bound within the composite film.

The organic polymer may be an ion conductive polymer. For example, the organic polymer may include repeating units of ether-based, styrene-based, or fluorinated hydrocarbon-based groups.

In some embodiments, the organic polymer may include polyvinylidene fluoride (PVDF), polystyrene (PS), polyether sulfone (PES), polyurethane (PU), polyethylene oxide (PEO), polyvinylidene fluoride-co-hexafluoropropylene (PVDF-co-HFP), polyimide (PI), polymethyl methacrylate (PMMA), polyvinyl chloride (PVC), polyvinyl alcohol (PVA), polyacrylonitrile (PAN), polyethyl methacrylate (PEMA), polycaprolactone (PCL), polyvinyl pyrrolidone (PVP), etc. In one embodiment, the organic polymer may include at least one of polyvinylidene fluoride, polystyrene, polyethersulfone or polyurethane. Accordingly, the mobility of lithium ion conduction in the composite electrolyte may be improved, thereby enhancing the ionic conductivity.

In some embodiments, the inorganic electrolyte may be an oxide-based solid electrolyte. For example, the oxide-based solid electrolyte may include an ion conductive compound containing a metal or oxygen. For example, the oxide-based solid electrolytes may include LLTO compounds, LLZO compounds, $Li_{6.4}La_3Zr_{1.4}Ta_{0.6}O_{12}$, $Li_6La_2CaTa_2O_{12}$, $Li_6La_2ANb_2O_{12}$ (where A is Ca or Sr), $Li_2Nd_3TeSbO_{12}$, $Li_3BO_{2.5}N_{0.5}$, $Li_9SiAlO_8$, LAGP compounds, LATP compounds, $Li_{1+x}Ti_{2-x}Al_xSi_y(PO_4)_3$ ($0 \le x \le 1$, $0 \le y \le 1$), $LiAl_xZr_{2-x}(PO_4)_3$ ($0 \le x \le 1$, $0 \le y \le 1$), $LiTi_xZr_{2-x}(PO_4)_3$ ($0 \le x \le 1$, $0 \le y \le 1$), LISICON compounds, LIPON compounds, perovskite compounds, NASICON compounds, and metal oxides such as $Al_2O_3$, $ZnO_2$, $Ce_2O_2$, $TiO_2$, $ZrO_2$, $HfO_2$, $MnO_2$, MgO, $WO_2$, and $V_2O_5$.

In one embodiment, the inorganic electrolyte may be an oxide-based solid electrolyte including lithium. For example, the oxide-based solid electrolyte including lithium may include an LLTO compound, an LLZO compound (e.g., a garnet-type LLZO compound), a NASICON compound, a LATP compound, a perovskite compound, etc. Accordingly, the ionic conductivity and mechanical strength of the electrolyte may be improved, thereby suppressing lithium dendrite growth, and enhancing high-temperature stability and cycle life characteristics.

In some embodiments, a content of the flame retardant compound may be 5 wt% to 30 wt%, 5 wt% to 28 wt%, or 5 wt% to 25 wt% based on the total weight of the electrolyte. Within the above range, the ionic conductivity of the electrolyte may be improved, while the cycle life characteristics of the secondary battery may be enhanced. In one embodiment, the content of the flame retardant compound may be 5 wt% to 20 wt%, 7 wt% to 20 wt%, or 10 wt% to 20 wt% based on the total weight of the electrolyte. Within the above range, the flame retardancy of the electrolyte may be improved, while the cycle life characteristics may be further enhanced.

In some embodiments, pores may be formed in the composite membrane. Accordingly, the flame retardant compound may be positioned in the pores of the composite membrane. Therefore, the cycle life characteristics and flame retardancy of the electrolyte may be improved, and the resistance may be reduced.

FIG. 1 is a flowchart for describing processes of a method of preparing an electrolyte for a secondary battery according to exemplary embodiments. Hereinafter, the method of preparing the above-described electrolyte for a secondary battery will be described with reference to FIG. 1.

Referring to FIG. 1, a first mixed solution including the above-described electrolyte monomer and electrolyte solution may be prepared (e.g., step S10).

In exemplary embodiments, the above-described electrolyte monomer and electrolyte may be mixed to prepare the first mixed solution.

In some embodiments, the first mixed solution may further include an organic polymer and an inorganic electrolyte. For example, the first mixed solution may include an electrolyte monomer, an electrolyte, an organic polymer and an inorganic electrolyte.

In some embodiments, the organic polymer and the inorganic electrolyte may be mixed with the electrolyte monomer and the electrolyte in the form of a composite electrolyte membrane.

The composite electrolyte membrane may be prepared by drying a second mixed solution including the organic polymer, the inorganic electrolyte, a first solvent and a second solvent.

In one embodiment, the solubility of the organic polymer in the first solvent may be greater than the solubility of the organic polymer in the second solvent. For example, the organic polymer in the first solvent may have a solubility of 1 g/100 g or more, 33 g/100 g or more, 10 g/100 g or more, 100 g/100 g or more, or 100 g/100 g to 1,000 g/100 g. For example, the solubility of the organic polymer in the second solvent may be less than 1 g/100 g, less than 0.1 g/100 g, or less than 0.01 g/100 g.

In one embodiment, the organic polymer in the first mixed solution may be dissolved in the first solvent, and may not be dissolved in the second solvent.

For example, the organic polymer may be soluble in the first solvent. Accordingly, the organic polymer may be dissolved in the first solvent.

For example, the organic polymer may be insoluble in the second solvent. Accordingly, the organic polymer may not be substantially dissolved in the second solvent.

The 'solubility' refers to the mass (g) of the organic polymer dissolved in 100 g of the first solvent or the second solvent. For example, a solubility of 1 g/100 g may mean that 1 g of the organic polymer is dissolved in 100 g of the first solvent or the second solvent.

In some embodiments, the first solvent may be miscible with the second solvent. For example, the first solvent and the second solvent may be mixed or blended.

The organic polymer and the inorganic electrolyte may be the above-described organic polymer and inorganic electrolyte.

The first solvent may be a solvent that dissolves the organic polymer and may be miscible with the second solvent. The first solvent may include, for example, tetrahydrofuran (THF), 2-methyltetrahydrofuran (2-Me-THF), N-methyl-2-pyrrolidone (NMP), 1,3-dioxolane, vinylene carbonate (VC), etc. These may be used alone or in combination of two or more thereof. In one embodiment, the first solvent may be tetrahydrofuran.

The second solvent may be a solvent that does not dissolve the organic polymer and may be miscible with the first solvent. The second solvent may include, for example, heptane, octane, nonane, decane, dodecane, 2,2,4-trimethylpentane, and the like. These may be used alone or in combination of two or more thereof. In one embodiment, the second solvent may be octane.

The drying may be performed by casting the second mixed solution onto a substrate (e.g., a glass substrate, a plastic substrate, etc.), and then drying it.

In one embodiment, drying the second mixed solution may include removing the first solvent at a first temperature and removing the second solvent at a second temperature. For example, the first solvent in the second mixed solution may be dried, and then the second solvent may be dried to prepare a composite electrolyte membrane. The first drying and the second drying may be performed sequentially, or the second drying may be performed after a certain period of time has elapsed after the first drying. Accordingly, the first solvent may be dried first, and then the second solvent may be dried.

In some embodiments, the content of the electrolyte monomer may be 5 wt% to 30 wt%, 5 wt% to 28 wt%, or 5 wt% to 25 wt% based on the total weight of the first mixed solution. Within the above range, the ionic conductivity of the electrolyte may be improved, while the flame retardancy may be enhanced. In one embodiment, the content of the electrolyte monomer may be 5 wt% to 20 wt%, 7 wt% to 20 wt%, or 10 wt% to 20 wt% based on the total weight of the first mixed solution. Within the above range, the flame retardancy of the electrolyte may be improved, while the ionic conductivity may be further enhanced.

In some embodiments, the above-described electrolyte monomer includes a phosphorus-containing functional group and at least one of a thermally reactive functional group or a photoreactive functional group.

In some embodiments, the electrolyte may include a thermal initiator and/or a photo-initiator to induce thermal curing and/or photocuring of the first mixed solution. In one embodiment, the content of the thermal initiator and/or the photo-initiator may be 0.5 wt parts to 2 wt parts based on 100 wt parts of the first mixed solution included in each electrolyte composition.

For example, the thermal initiator may include azo compounds such as 2,2-azobis(2-cyanobutane), 2,2-azobis(methylbutyronitrile), 2,2'-azoisobutyronitrile (AIBN), azobisdimethylvaleronitrile (AMVN), etc., or peroxide compounds such as benzoyl peroxide, acetyl peroxide, dilauryl peroxide, di-tert-butyl peroxide, cumyl peroxide, hydrogen peroxide, etc.

For example, the photo-initiator may include acyl phosphines such as 2-hydroxy-2-methyl-1-phenylpropan-1-one (HMPP), benzoin ether, dialkyl acetophenone, hydroxyalkyl ketone, phenyl glyoxylate, Benzyl Dimethyl Ketal, 2,4,6-trimethyl-benzoyl-trimethyl phosphine oxide, etc., and $\alpha$-aminoketones.

In some embodiments, the electrolyte may include a lithium salt. The lithium salt may include the above-described lithium salt. Accordingly, the ionic conductivity of the electrolyte for a secondary battery may be improved.

In some embodiments, the electrolyte may include an organic solvent. For example, the organic solvent may include a carbonate organic solvent such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and vinylene carbonate (VC), etc., or dimethyl sulfoxide, acetonitrile, dimethoxyethane, diethoxyethane, sulfolane, gamma-butyrolactone, propylene sulfite and tetrahydrofuran. These may be used alone or in combination of two or more thereof.

In one embodiment, the electrolyte may further include an additive. The additive may include, for example, a cyclic carbonate compound, a fluorine-substituted cyclic carbonate compound, a sultone compound, a cyclic sulfate compound, a cyclic sulfite compound, a phosphate compound, and a borate compound.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In one embodiment, the organic solvent may be a carbonate-based organic solvent. Accordingly, the electrical stability and chemical stability of the electrolyte for a secondary battery may be improved.

According to exemplary embodiments, the first mixed solution may be cured (e.g., step S20). Accordingly, an electrolyte for a secondary battery may be prepared.

In some embodiments, the electrolyte monomer may be polymerized or copolymerized while curing the first mixed solution. Accordingly, the electrolyte for a secondary battery may include a flame retardant compound including a polymer of the electrolyte monomer.

In some embodiments, the content of the electrolyte monomer based on the total weight of the first mixed solution may be substantially the same as the content of the flame retardant compound in the total weight of the electrolyte. For example, the weight change (decrease or increase) during the curing of the first mixed solution may be 0.0001 wt% or 0.00001 wt% or less based on the total weight of the flame retardant compound. Accordingly, the content of the electrolyte monomer based on the total weight of the first mixed solution may be substantially the same as the content of the flame retardant compound in the total weight of the electrolyte.

In some embodiments, curing the first mixed solution may include heat-treating the first mixed solution. For example, the electrolyte monomer of the first mixed solution may be polymerized or copolymerized into a flame retardant compound by heat-treating the first mixed solution.

In some embodiments, the heat treatment may be performed at a temperature of 20 °C to 300°C, 20°C to 200°C, 40 °C to 160°C, 50 °C to 160°C, 55 °C to 160°C, 55 °C to 140°C, 55 °C to 120 °C, 55 °C to 100 °C, or 55 °C to 85 °C. In one embodiment, the heat treatment time may be performed while increasing the temperature from room temperature (e.g., 25 °C) at a rate of 1 °C/min to 20 °C/min, 1 °C/min to 10 °C/min, 2 °C/min to 10 °C/min, or 3 °C/min to 10 °C/min.

In some embodiments, the heat treatment may be performed for 30 minutes to 2 hours, 30 minutes to 1.5 hours, or 45 minutes to 1.25 hours.

Within the above temperature and time ranges, the electrolyte monomer within the first mixed solution may be sufficiently polymerized or copolymerized.

In some embodiments, curing the first mixed solution may include irradiating the first mixed solution with light. For example, the first mixed solution may be light-cured, such that the electrolyte monomer of the first mixed solution may be polymerized or copolymerized into a flame retardant compound. Accordingly, the polymerization or copolymerization reaction of the electrolyte monomer may be performed at a relatively low temperature. Therefore, damage to the composite membrane during high-temperature heat treatment may be prevented.

In some embodiments, the UV photocuring process for the photopolymerization may be performed using light having a wavelength of 250 nm to 400 nm and an intensity of 800 mW/cm$^2$ to 1100 mW/cm$^2$. In one embodiment, the UV photocuring process may be performed for 5 seconds to 5 minutes. Within the above wavelength and intensity ranges, the electrolyte monomer within the first mixed solution may be sufficiently polymerized or copolymerized.

FIG. 2 is a schematic cross-sectional view illustrating an electrode cell according to exemplary embodiments.

The secondary battery according to exemplary embodiments may include an electrode cell. Referring to FIG. 2, the electrode cell may include a cathode 240, an anode 260 disposed opposite to the cathode 240, and an electrolyte layer 210 disposed between the cathode 240 and the anode 260. For example, the electrolyte layer 210 may include a membrane formed by impregnating and curing the above-described first mixed solution into a separation membrane. The electrolyte layer 210 may be a separation membrane including the above-described electrolyte.

The cathode 240 may include a cathode current collector 235 and a cathode active material layer 230 disposed on at least one surface of the cathode current collector 235.

The cathode current collector 235 may include stainless steel, nickel, aluminum, titanium, or an alloy thereof. The cathode current collector 235 may also include aluminum or stainless steel having a surface treated with carbon, nickel, titanium or silver. The cathode current collector 235 may have a thickness of, for example, 10 μm to 50 μm, but it is not limited thereto.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) or aluminum (Al).

In some embodiments, the cathode active material or the lithium-nickel metal oxide may include a layered structure or a crystal structure represented by Formula 8 below.

[Formula 8] $Li_xNi_aM_bO_{z+2}$

In Formula 8, x, a, b and z may satisfy $0.9 \leq x \leq 1.2$, $0.6 \leq a \leq 0.99$, $0.01 \leq b \leq 0.4$, $-0.5 \leq z \leq 0.1$. As described above, M may include Co, Mn and/or Al.

The chemical structure represented by Formula 8 indicates a bonding relationship between elements included in

the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 8 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 8.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 8-1 below.

[Formula 8-1] $Li_xNi_aM1_{b1}M2_{b2}O_{2+z}$

In Formula 8-1, M1 may include Co, Mn, and/or Al; M2 may include the auxiliary elements described above; and x, a, b1, b2 and z may satisfy $0.9 \le x \le 1.2$, $0.6 \le a \le 0.99$, $0.01 \le b1+b2 \le 0.4$, $-0.5 \le z \le 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to become incorporated into the bonding structure represented by Formula 8 or Formula 8-1 above.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., a molar fraction of nickel based on the total number of moles of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material having a chemical structure or crystal structure represented by Formula 9 below, a lithium (Li)-rich layered oxide (LLO)/over lithiated oxide (OLO)-based active material, or a cobalt (Co)-less active material.

[Formula 9] $p[Li_2MnO_3]\cdot(1-p)[Li_qJO_2]$

In Formula 9, p and q may satisfy $0<p<1$, $0.9 \le q \le 1.2$, and J may include at least one element among Mn, Ni, Co, Fe, Cr, V, Cu, Zn, Ti, Al, Mg and B.

In some embodiments, the cathode active material may be a sodium-based active material or a potassium-based active material. The sodium-based active material may include a layered structure or a crystal structure in which Li of Formula 8, Formula 8-1, and/or Formula 9, described above, is substituted with Na and/or K.

In some embodiments, the cathode active material may be a calcium-based active material. The calcium-based active material may include, for example, a calcium-cobalt active material and a calcium-phosphate active material.

For example, the cathode active material may be dispersed in a solvent to prepare a cathode slurry. The cathode current collector may be coated with the cathode slurry, and then dried and roll-pressed to prepare the cathode. The coating process may be performed using methods such as gravure coating, slot die coating, simultaneous multilayer die

coating, imprinting, doctor blade coating, dip coating, bar coating or casting, etc., but it is not limited thereto. The cathode slurry may further include a binder, and optionally further include the electrolyte, a conductive material, a thickener or the like.

Solvents used in the preparation of the cathode active material layer may include, for example, N-methyl-2-pyrrolidone (NMP), dimethylformamide (DMF), dimethylacetamide (DMA), N,N-dimethylaminopropylamine (DMAPA), ethylene oxide (EO), tetrahydrofuran (THF), etc.

In one embodiment, the electrolyte included in the cathode active material layer 230 may be the above-described electrolyte for a secondary battery. In one embodiment, the electrolyte included in the cathode active material may be the above-described inorganic electrolyte. For example, the secondary battery may be provided as an all-solid-state battery including the above-described electrolyte or inorganic electrolyte.

The binder may include polyvinylidene fluoride (PVDF), poly(vinylidene fluoride-co-hexafluoropropylene) (PVDF-HFP), polyacrylonitrile, polymethylmethacrylate, acrylonitrile butadiene rubber (NBR), polybutadiene rubber (BR), styrene-butadiene rubber (SBR), etc. In one embodiment, a PVDF-based binder may be used as the cathode binder.

The conductive material may be added to the cathode active material layer 230 in order to enhance the conductivity thereof and/or the mobility of lithium ions or electrons. For example, the conductive material may further include carbon-based conductive materials such as graphite, carbon black, acetylene black, Ketjen black, graphene, vapor-grown carbon fibers (VGCFs), carbon fibers and/or metal-based conductive materials, including perovskite materials, such as tin, tin oxide, titanium oxide, $LaSrCoO_3$, and $LaSrMnO_3$, but it is not limited thereto.

The cathode active material layer 230 may further include a thickener and/or a dispersant. In one embodiment, the cathode active material layer 230 may include a thickener such as carboxymethyl cellulose (CMC).

The anode 260 may include an anode current collector 255 and an anode active material layer 250 disposed on at least one surface of the anode current collector 255.

The anode current collector 255 may include, for example, a copper foil, a nickel foil, a stainless steel foil, a titanium foil, a nickel foam, a copper foam, a polymer substrate coated with a conductive metal, and the like. The anode current collector 255 may have a thickness of, for example, 10 μm to 50 μm, but it is not limited thereto.

The anode active material layer 250 may include an anode active material. A material capable of intercalating and deintercalating lithium ions may be used as the anode active material. For example, the anode active material may include crystalline carbon-based materials such as crystalline carbon, amorphous carbon, a carbon composite, or carbon fibers, etc.; lithium metal; a lithium alloy; a silicon (Si)-containing material or a tin (Sn)-containing material, etc.

The amorphous carbon may include, for example, natural graphite, artificial graphite, graphite cokes, mesocarbon microbeads (MCMB), mesophase pitch-based carbon fibers (MPCF), etc.

Examples of the crystalline carbon may include graphite-based carbons such as natural graphite, artificial graphite, graphite cokes, graphite MCMB, and graphite MPCF, etc.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer 250. In one embodiment, a lithium thin-film layer may be used as the anode active material layer 250.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, $SiO_x$ ($0<x<2$), metal-doped $SiO_x$ ($0<x<2$), a silicon-carbon composite, etc. The metal may include lithium and/or magnesium, and the metal-doped $SiO_x$ ($0<x<2$) may include a metal silicate.

For example, an anode slurry may be prepared by mixing the anode active material in a solvent. The anode slurry may be applied/deposited to the anode current collector, then dried and roll-pressed to prepare the anode active material layer 250. The coating process may be performed using substantially the same method as the method for preparing the cathode active material layer 230. The anode active material layer 250 may further include a binder, and optionally may further include the electrolyte, a conductive agent, a thickener, etc.

In some embodiments, the anode may include the anode active material layer 250 in the form of a lithium metal formed through a deposition/coating process.

The solvent for the anode active material layer may include, for example, water, pure water, deionized water, distilled water, ethanol, isopropanol, methanol, acetone, n-propanol, t-butanol, etc.

In one embodiment, the electrolyte included in the anode active material layer 250 may be the above-described electrolyte for a secondary battery. In one embodiment, the electrolyte included in the anode active material layer may be the above-described inorganic electrolyte. For example, the secondary battery may be provided as an all-solid-state battery including the above-described electrolyte or inorganic electrolyte.

The above-described materials that can be used when manufacturing the cathode as the binder, conductive material and thickener may also be used.

In some embodiments, a styrene-butadiene rubber (SBR)-based binder, carboxymethyl cellulose (CMC),

polyacrylic acid-based binder, poly(3,4-ethylenedioxythiophene, PEDOT)-based binder, and the like may be used as an anode binder.

FIG. 3 is a schematic view illustrating the structure of an electrolyte layer for a secondary battery according to exemplary embodiments.

Referring to FIG. 3, the electrolyte layer 210 may include the above-described electrolyte 100. For example, the electrolyte layer 210 may include a flame retardant compound 110 included in the electrolyte 100. For example, the electrolyte layer 210 may include a membrane formed by impregnating a separation membrane with the above-described first mixed solution and curing the same. The electrolyte layer 210 may be a separation membrane including an electrolyte.

According to exemplary embodiments, the electrolyte layer 210 may be interposed between the cathode 240 and the anode 260. For example, the electrolyte layer 210 may be a gel-polymer electrolyte layer 210 including the above-described electrolyte.

According to exemplary embodiments, an electrode cell 200 is defined by the cathode 240, the anode 260, and the solid electrolyte layer 210, and a plurality of electrode cells 200 may be stacked to form an electrode assembly. For example, the electrode assembly may be formed by winding, stacking, folding, or the like.

For example, electrode tabs (a cathode tab and an anode tab) may protrude from the cathode current collector 235 and the anode current collector 255, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

## Examples and Comparative Examples

### Example 1

(1) Preparation of electrolyte monomer

1,4-dioxane (100 ml), 5 g of the compound represented by Formula 3 above, and 4.51 g of triethylamine were introduced into a reactor to prepare a mixed solution.

After cooling the reactor to 0 °C, 5.09 g of a compound represented by Formula 10 below was added to the mixed solution over a period of 1 hour, and then the reactor was heated to 25 °C and the mixture was stirred for 40 hours to synthesize an intermediate. Thereafter, the mixed solution was washed twice with ultrapure water.

[Formula 10]

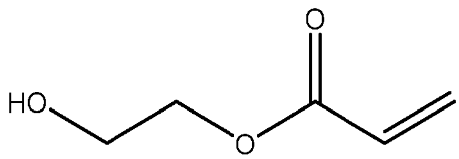

Thereafter, the mixed solution was purified over hexane and ethyl acetate by column chromatography to obtain 5.38 g of intermediate.

Subsequently, 5.38 g of the intermediate was dissolved in 50 ml of tetrahydrofuran (THF), and 1.55 g of sodium fluoride (NaF) was added. The mixture was reacted at 25 °C for 24 hours.

Thereafter, the reaction mixture was filtered and vacuum-dried to obtain 4.05 g of the electrolyte monomer (yield: 52.4%).

The obtained electrolyte monomer was a compound represented by Formula 1 above, wherein $X_1$, $X_2$ and $X_3$ are fluorine (F), and $R_1$, $R_2$ and $R_3$ are each represented by Formula 2-1 above ($^1$H-NMR chemical shift (500 MHz, $CDCl_3$) $\delta$: 6.44-6.53 (m, 3H), 6.15-6.23 (m, 3H), 5.90-5.94 (m, 3H), 4.38-4.50 (m, 12H)).

(2) Preparation of first mixed solution

The electrolyte monomer was mixed with an electrolyte solution, which included fluoroethylene carbonate (FEC) added to a 1.0 M $LiPF_6$ solution (a mixed solution of EC/EMC in a volume ratio of 25:75), to prepare a first mixed solution.

The content of the electrolyte monomer in the total weight of the first mixed solution was 15 wt%.

(3) Manufacture of lithium secondary battery

A slurry was prepared by mixing $LiNi_{0.6}Co_{0.2}Mn_{0.2}O_2$ as a cathode active material, carbon black as a conductive material, and polyvinylidene fluoride (PVDF) as a binder in a weight ratio of 92:5:3. The slurry was uniformly applied to an aluminum foil and vacuum-dried at 130°C. The dried slurry was roll-pressed to manufacture a cathode for a lithium secondary battery.

An anode slurry was prepared by mixing natural graphite as an anode active material, SBR/CMC as a binder, and carbon black as a conductive material in a weight ratio of 96:3: 1. The anode slurry was uniformly applied to a copper (Cu) foil, then dried and roll-pressed to prepare an anode.

Polyethylene (PE) was prepared as a separation membrane. A coin cell was formed by placing the cathode and the anode so that they face each other with a separation membrane interposed therebetween.

After the coin cell was placed in a coin cell plate, 50 μl of the above-described first mixed solution was injected. Subsequently, a spacer and a spring were sequentially stacked, a cap was placed, and then clamped.

Thereafter, the assembled cell was thermally cured at 70 °C for 1 hour to manufacture a secondary battery including the electrolyte for a secondary battery.

**Examples 2 to 12**

Secondary batteries were manufactured in the same manner as in Example 1, except that, when preparing an electrolyte monomer, the type and content of the compound represented by Formula 10 were changed as shown in Table 1 below, so that the types ($R_1$, $R_2$ and $R_3$ in Formula 1) of the electrolyte monomer were changed as shown in Table 2 below, and the contents of the electrolyte monomer were changed as shown in Table 2 below.

**Comparative Example 1**

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material in a weight ratio of 92:5:3. The cathode slurry was uniformly applied to an aluminum foil, then dried and roll-pressed to prepare a cathode.

An anode slurry was prepared by mixing natural graphite as an anode active material, SBR/CMC as a binder, and carbon black as a conductive material in a weight ratio of 96:3: 1. The anode slurry was uniformly applied to a copper (Cu) foil, then dried and roll-pressed to prepare an anode.

Polyethylene (PE) was prepared as a separation membrane. A coin cell was assembled by placing the cathode and anode to face each other with the separator interposed therebetween.

After placing the coin cell in a coin cell plate, an electrolyte was injected, a cap was placed, and the assembly was clamped to manufacture a secondary battery.

A solution, prepared by adding fluoroethylene carbonate (FEC) to a 1.0 M $LiPF_6$ solution (a mixed solution of EC/EMC in a volume ratio of 25:75), was used as the electrolyte.

**Comparative Example 2**

A secondary battery was manufactured in the same manner as in Example 1, except that the type of the electrolyte monomer was changed as shown in Table 2 below when preparing the electrolyte for a secondary battery.

[TABLE 1]

| | Types and contents of compounds introduced during preparation of electrolyte monomer | |
|---|---|---|
| | Type | Content (g) |
| Example 1 | A1 | 5.09 |
| Example 2 | A1 | 5.09 |
| Example 3 | A1 | 5.09 |
| Example 4 | A1 | 5.09 |
| Example 5 | A2 | 8.86 |
| Example 6 | A2 | 8.86 |
| Example 7 | A2 | 8.86 |
| Example 8 | A3 | 8.95 |

(continued)

| | Types and contents of compounds introduced during preparation of electrolyte monomer | |
|---|---|---|
| | Type | Content (g) |
| Example 9 | A3 | 8.95 |
| Example 10 | A4 | 15.26 |
| Example 11 | A4 | 15.26 |
| Example 12 | A4 | 15.26 |

The specific components described in Table 1 are as follows:

A1: Compound represented by Formula 10 above

A2: Compound represented by Formula 11 below

[Formula 11]

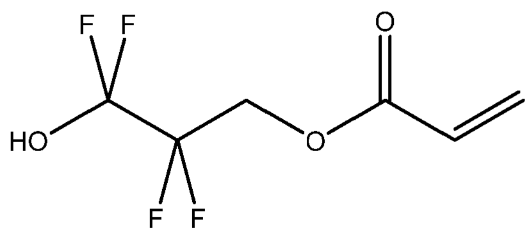

A3: Compound represented by Formula 12 below

[Formula 12]

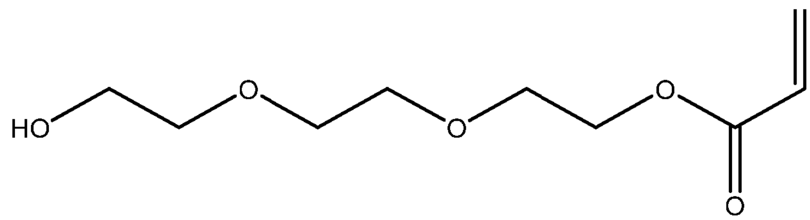

A4: Compound represented by Formula 13 below

[Formula 13]

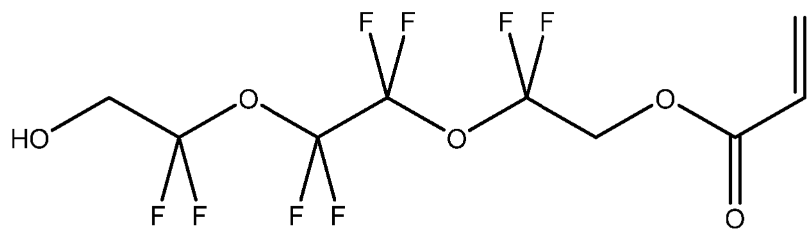

[TABLE 2]

| | Type of monomer for electrolyte | $R_1$, $R_2$ and $R_3$ | | | Content of electrolyte monomer based on total weight of first mixed solution (wt%) |
|---|---|---|---|---|---|
| | | $R_1$ | $R_2$ | $R_3$ | |
| Example 1 | B1 | C1 | C1 | C1 | 5 |
| Example 2 | B1 | C1 | C1 | C1 | 7.5 |
| Example 3 | B1 | C1 | C1 | C1 | 2 |
| Example 4 | B1 | C1 | C1 | C1 | 31 |
| Example 5 | B1 | C2 | C2 | C2 | 5 |
| Example 6 | B1 | C2 | C2 | C2 | 7.5 |
| Example 7 | B1 | C2 | C2 | C2 | 10.5 |
| Example 8 | B1 | C3 | C3 | C3 | 5 |
| Example 9 | B1 | C3 | C3 | C3 | 7.5 |
| Example 10 | B1 | C4 | C4 | C4 | 5 |
| Example 11 | B1 | C4 | C4 | C4 | 7.5 |
| Example 12 | B1 | C4 | C4 | C4 | 10.5 |
| Comparative Example 1 | - | - | - | - | - |
| Comparative Example 2 | B2 | - | - | - | 5 |

The specific components described in Table 2 are as follows:

B1: Compound represented by Formula 1 above
B2: Compound represented by Formula 14 below

[Formula 14]

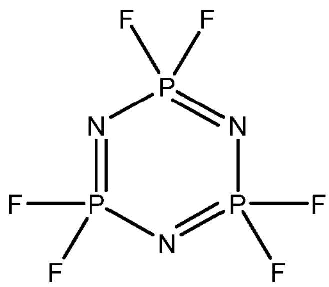

C1: Functional group represented by Formula 2-1 above
C2: Functional group represented Formula 2-2 above
C3: Functional group represented Formula 2-3 above
C4: Functional group represented Formula 2-4 above

## Experimental Example 1: Evaluation of electrolyte

### (1) Evaluation of self-extinguishing time

Glass fiber was cut into a diameter of 16 pi and dried at 120 °C to prepare dried glass fiber.
The glass fiber was impregnated with first mixed solution prepared according to the above-described examples in a sealed container, and then cured at 70 °C for 1 hour to prepare a sample.
After igniting the sample, the time until the fire went out (extinguishing time) was measured. Before ignition, the sample was weighed to obtain a sample mass (g).

The self-extinguishing time was calculated according to Equation 1 below.

[Equation 1]

$$\text{Self}-\text{extinguishing time (s/g)} = \frac{\text{Extinguishing time (s)}}{\text{Sample mass (g)} - \text{Glass fiber mass (g)}}$$

[TABLE 3]

| Classification | Self-extinguishing time (s/g) |
|---|---|
| Example 1 | 68.6 |
| Example 2 | 63.2 |
| Example 3 | 80.9 |
| Example 4 | 10.8 |
| Example 5 | 55.1 |
| Example 6 | 50.2 |
| Example 7 | 45.6 |
| Example 8 | 78.5 |
| Example 9 | 89.8 |
| Example 10 | 48.3 |
| Example 11 | 40.7 |
| Example 12 | 36.8 |
| Comparative Example 1 | 129.0 |
| Comparative Example 2 | 92.3 |

Referring to Table 3, in the examples using a compound in which $R_1$, $R_2$ and $R_3$ of Formula 1 are functional groups represented by Formulas 2-1 to 2-4, respectively, as a monomer for an electrolyte monomer, the self-extinguishing time was less than 90 s/g.

In Example 3, where the content of the electrolyte monomer was reduced, the self-extinguishing time increased slightly.

In Example 4, where the content of the electrolyte monomer was increased, the self-extinguishing time also increased slightly.

In Examples 5 to 7 and Examples 10 to 12, where compounds having R2 and R3 of Formula 1 containing fluorine (F) were used as the electrolyte monomer, the self-extinguishing time was slightly reduced.

In Comparative Example 1, where an electrolyte solution not containing any electrolyte monomer was used, the self-extinguishing time exceeded 120 s/g.

In Comparative Example 2, where the electrolyte monomer was included but the compound represented by Formula 1 was not used, the self-extinguishing time exceeded 90 s/g.

**Experimental Example 2: Evaluation of lithium secondary battery**

**(1) Measurement of initial capacity and evaluation of initial coulombic efficiency**

The lithium secondary batteries according to the above-described examples and comparative examples were charged (CC-CV 0.1C 4.2V 0.005C CUT-OFF) in a chamber at 25 °C, and then the initial charge capacity was measured, and then discharged (CC 0.1C 2.7V CUT-OFF), and then the initial discharge capacity was measured.

The initial coulombic efficiency was evaluated by converting the value obtained by dividing the measured initial discharge capacity by the measured initial charge capacity into a percentage (%).

The measured initial charge capacity and initial discharge capacity, and the evaluated initial coulombic efficiency are shown in Table 4 below.

**(2) Evaluation of cycle retention rate**

Charging (CC/CV 0.5C 4.2V 0.05C CUT-OFF) and discharging (CC 0.5C 2.7V CUT-OFF) were repeated on the lithium secondary batteries according to the examples and comparative examples for 100 cycles in a chamber at 25 °C. Then, the cycle retention rate was evaluated as a percentage of the discharge capacity at 100th cycle divided by the discharge capacity at the 1st cycle.

The evaluated cycle retention rate is shown in Table 4 below.

[TABLE 4]

| Classification | Initial charge capacity (mAh/g) | Initial discharge capacity (mAh/g) | Initial coulombic efficiency (%) | Cycle retention rate (25°C, 100 cycles) (%) |
|---|---|---|---|---|
| Example 1 | 171.7 | 169.9 | 98.95 | 93.84 |
| Example 2 | 168.7 | 166.2 | 98.52 | 92.18 |
| Example 3 | 172.4 | 170.7 | 98.99 | 93.94 |
| Example 4 | 145.2 | 140.3 | 96.62 | 88.18 |
| Example 5 | 174.2 | 173.5 | 99.59 | 96.62 |
| Example 6 | 171.2 | 170.8 | 99.77 | 94.36 |
| Example 7 | 169.8 | 166.9 | 98.29 | 93.01 |
| Example 8 | 171.1 | 169.8 | 99.25 | 94.24 |
| Example 9 | 169.9 | 165.6 | 97.46 | 92.81 |
| Example 10 | 174.4 | 172.8 | 99.08 | 97.56 |
| Example 11 | 171.7 | 170.9 | 99.77 | 95.46 |
| Example 12 | 169.7 | 167.2 | 99.53 | 94.78 |
| Comparative Example 1 | 171.4 | 171.01 | 99.77 | 96.50 |
| Comparative Example 2 | 168.8 | 163.8 | 96.51 | 91.04 |

Referring to Table 4, in the examples using lithium secondary batteries including an electrolyte including a polymer derived from an electrolyte monomer in which $R_1$, $R_2$ and $R_3$ of the compound represented by Formula 1 are functional groups represented by Formulas 2-1 to 2-4, respectively, the initial coulombic efficiency was 97% or higher.

In Example 3, where the content of the electrolyte monomer was reduced, the initial coulombic efficiency and the cycle retention rate increased slightly.

In Example 4, where the content of the electrolyte monomer was increased, the initial coulombic efficiency and the cycle retention rate decreased slightly.

In Examples 5 to 7 and Examples 10 to 12, where electrolytes including an electrolyte monomer in which $R_1$, $R_2$ and $R_3$ of the compound represented by Formula 1 are fluorine-containing functional groups represented by Formula 2-2 and Formula 2-4 are used as the electrolyte monomer, the initial coulombic efficiency and the cycle retention rate increased slightly.

In Comparative Example 2, which used an electrolyte not containing the compound represented by Formula 1, the initial coulombic efficiency and the cycle retention rate decreased.

The disclosed technology can be implemented in making rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery or battery pack used in various power sources and power supplies, thereby mitigating climate changes in connection with uses of power sources and power supplies. Batteries or battery packs based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent

document.

**Claims**

1. A monomer for an electrolyte comprising a compound represented by Formula 1 below:

[Formula 1]

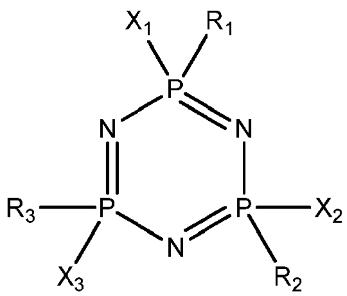

wherein $X_1$, $X_2$ and $X_3$ are each independently a halogen element,
$R_1$, $R_2$ and $R_3$ are each independently hydrogen, a halogen element, a substituted or unsubstituted C1 to C6 alkyl group, or a polymerizable group, and
at least one of $R_1$, $R_2$ or $R_3$ is a polymerizable group.

2. The monomer for an electrolyte according to claim 1, wherein in Formula 1, $R_1$ to $R_3$ are the same as each other, and/or wherein in Formula 1, $X_1$, $X_2$ and $X_3$ are fluorine (F).

3. The monomer for an electrolyte according to claim 1 or 2, wherein the polymerizable group is represented by Formula 2 below:

[Formula 2]

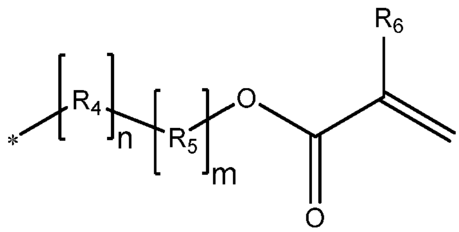

wherein $R_4$ is a substituted or unsubstituted C1 to C10 oxyalkylene group, $R_5$ is a substituted or unsubstituted C1 to C10 alkylene group, and $R_6$ is hydrogen or a methyl group, and
wherein n is 0 to 5, m is 0 to 3, and * represents a bonding site,
optionally, wherein in Formula 1 above, $R_1$, $R_2$ and $R_3$ are each independently represented by Formula 2.

4. The monomer for an electrolyte according to claim 3, wherein in Formula 2 above, m is 0, and n is 1 to 3, optionally, wherein in Formula 2 above, $R_4$ is a substituted or unsubstituted C1 to C6 oxyalkylene group.

5. The monomer for an electrolyte according to any one of claims 1 to 4, wherein in Formula 1 above, $R_1$, $R_2$ and $R_3$ are each independently represented by at least one of Formula 2-1, Formula 2-2, Formula 2-3, or Formula 2-4 below:

[Formula 2-1]

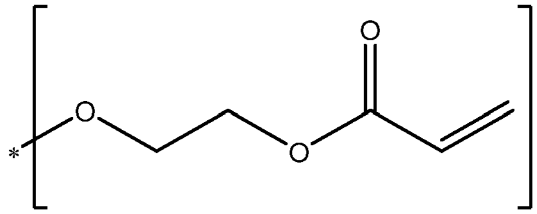

(in Formula 2-1, * represents a bonding site)

[Formula 2-2]

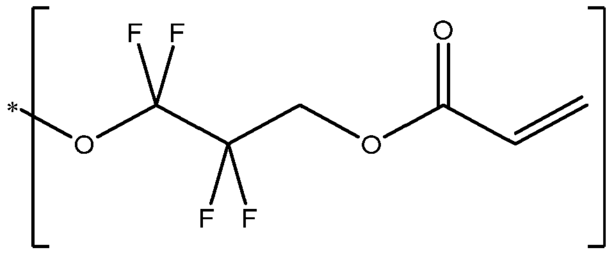

(in Formula 2-2, * represents a bonding site)

[Formula 2-3]

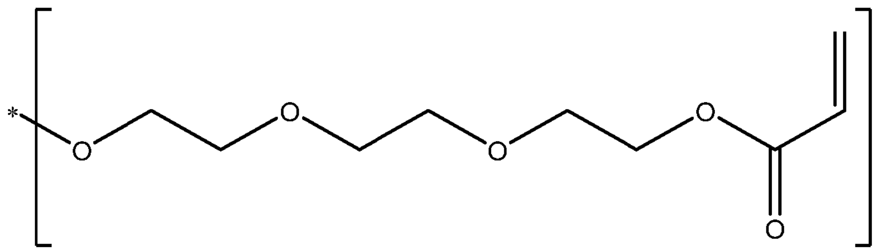

(in Formula 2-3, * represents a bonding site)

[Formula 2-4]

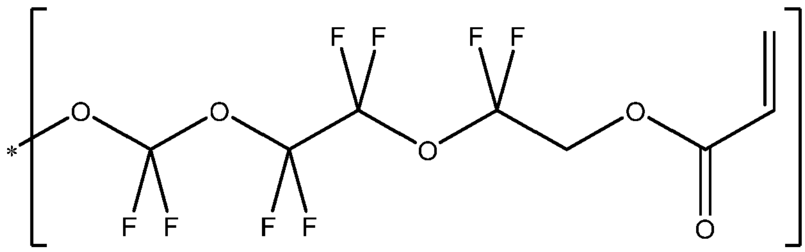

(in Formula 2-4, * represents a bonding site)

**6.** An electrolyte for a secondary battery comprising:

a flame retardant compound comprising a polymer derived from the monomer for an electrolyte according to any one of claims 1 to 5; and
a lithium salt.

7. The electrolyte for a secondary battery according to claim 6, further comprising a composite electrolyte which comprises an organic polymer and an inorganic electrolyte,
wherein the composite electrolyte has a film form.

8. The electrolyte for a secondary battery according to claim 6 or claim 7, wherein the inorganic electrolyte comprises an oxide-based solid electrolyte.

9. The electrolyte for a secondary battery according to any one of claims 6 to 8, wherein a content of the flame retardant compound is 5% by weight to 30% by weight based on a total weight of the electrolyte for a secondary battery.

10. A lithium secondary battery comprising:

a cathode;
an anode disposed opposite to the cathode; and
an electrolyte layer disposed between the cathode and the anode and comprising the electrolyte for a secondary battery according to any one of claims 6 to 9.

11. A method of preparing an electrolyte for a secondary battery comprising:

preparing a first mixed solution comprising a monomer for an electrolyte according to any one of claims 1 to 5 and an electrolyte solution; and
curing the first mixed solution.

12. The method of preparing an electrolyte for a secondary battery according to claim 11, wherein the first mixed solution further comprises an organic polymer and an inorganic electrolyte.

13. The method of preparing an electrolyte for a secondary battery according to claim 11 or claim 12, wherein a content of the monomer for an electrolyte is 5 wt% to 30 wt% based on a total weight of the first mixed solution.

14. The method of preparing an electrolyte for a secondary battery according to any one of claims 11 to 13, wherein the first mixed solution further comprises a thermal initiator, and
the step of curing the first mixed solution comprises heat-treating the first mixed solution.

15. The method of preparing an electrolyte for a secondary battery according to any one of claims 11 to 14, wherein the first mixed solution further comprises a photo-initiator, and
the step of curing the first mixed solution comprises irradiating the first mixed solution with light.

[FIG. 1]

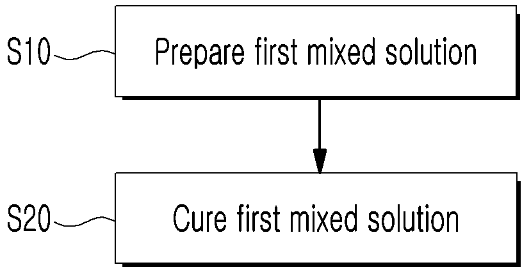


[FIG. 2]

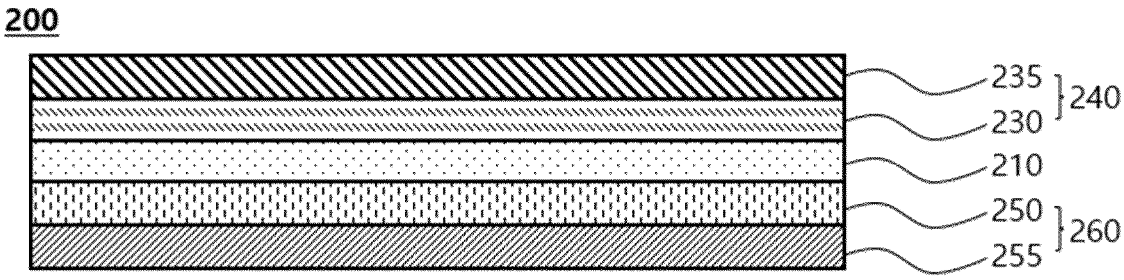


[FIG. 3]

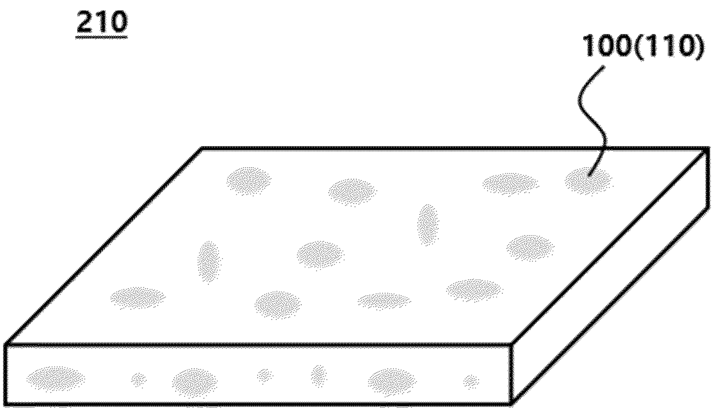

Europäisches Patentamt
European Patent Office
Office européen des brevets

# EUROPEAN SEARCH REPORT

Application Number
EP 25 18 0269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 031 482 A (HUAWEI DEVICE CO LTD) 28 April 2023 (2023-04-28)<br>* claims 1, 7 *<br>* formulas I-III *<br>----- | 1-15 | INV.<br>H01M10/056<br>H01M10/0565<br>H01M10/42<br>H01M50/403<br>H01M50/414<br>H01M50/446<br>H01M50/449<br>H01M50/489<br><br>ADD.<br>C07F9/6544 |
| A | JP 2024 504703 A (HUAWEI DEVICE CO LTD.) 1 February 2024 (2024-02-01)<br>* claims 1, 5, 11, 70 *<br>* paragraph [0011] *<br>* paragraph [0001] *<br>* paragraph [0083] *<br>* paragraph [0166] *<br>----- | 1-15 | |
| A | US 2022/255080 A1 (JANG BOR Z [US]) 11 August 2022 (2022-08-11)<br>* claims 1, 4 *<br>----- | 1-15 | |
| A | CN 117 136 446 A (GLOBAL GRAPHENE GROUP CORP) 28 November 2023 (2023-11-28)<br>* claims 1, 6, 12 *<br>* chemical formula 4 *<br>----- | 1-15 | TECHNICAL FIELDS SEARCHED (IPC)<br>H01M<br>C07F |

The present search report has been drawn up for all claims

2

| Place of search | Date of completion of the search | Examiner |
|---|---|---|
| The Hague | 14 October 2025 | Matés Valdivielso, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 0269

This annex lists the patent family members relating to the patent documents cited in the above-mentioned European search report. The members are as contained in the European Patent Office EDP file on
The European Patent Office is in no way liable for these particulars which are merely given for the purpose of information.

14-10-2025

| Patent document cited in search report | Publication date | Patent family member(s) | Publication date |
|---|---|---|---|
| CN 116031482 A | 28-04-2023 | CN 116031482 A | 28-04-2023 |
| | | WO 2023072084 A1 | 04-05-2023 |
| JP 2024504703 A | 01-02-2024 | JP 2024504703 A | 01-02-2024 |
| | | KR 20230134521 A | 21-09-2023 |
| | | WO 2022170299 A2 | 11-08-2022 |
| US 2022255080 A1 | 11-08-2022 | CN 117121220 A | 24-11-2023 |
| | | KR 20230155455 A | 10-11-2023 |
| | | US 2022255080 A1 | 11-08-2022 |
| | | WO 2022170363 A1 | 11-08-2022 |
| CN 117136446 A | 28-11-2023 | CN 117136446 A | 28-11-2023 |
| | | KR 20230154858 A | 09-11-2023 |
| | | US 2022255147 A1 | 11-08-2022 |
| | | WO 2022170362 A1 | 11-08-2022 |

EPO FORM P0459

For more details about this annex : see Official Journal of the European Patent Office, No. 12/82